Europäisches Patentamt

(19) European Patent Office

Office européen des brevets

(11) Numéro de publication: **0 029 923**
**B1**

(12) **FASCICULE DE BREVET EUROPEEN**

(45) Date de publication du fascicule du brevet: **06.02.85**

(21) Numéro de dépôt: **80106693.7**

(22) Date de dépôt: **31.10.80**

(51) Int. Cl.⁴: **G 06 K 7/10, G 06 K 7/016**

(54) **Circuit de commande de mémoire tampon.**

(30) Priorité: **29.11.79 US 98461**

(43) Date de publication de la demande:
**10.06.81 Bulletin 81/23**

(45) Mention de la délivrance du brevet:
**06.02.85 Bulletin 85/06**

(84) Etats contractants désignés:
**CH DE FR GB IT LI NL**

(56) Documents cités:
**FR-A-2 206 016**
**US-A-3 868 636**
**US-A-3 909 787**
**US-A-4 125 765**
**US-A-4 162 035**

**L'ONDE ELECTRIQUE, vol. 44, no. 446, mai
1964, Paris FR ANDRE et al.: "Analyseur
multiparamétrique", pages 535-543
DATAMATION, vol. 6, no. 1, janvier-février 1960
Barrington III. US PORTER: "The RW-400-A
New Polymorphic Data System", pages 8-14**

(73) Titulaire: **International Business Machines
Corporation
Old Orchard Road
Armonk, N.Y. 10504 (US)**

(72) Inventeur: **Laurer, George Joseph
4608 Oak Park Rd.
Raleigh, NC 27612 (US)**
Inventeur: **Pierce, Charles Michael
4009 Grimstead Lane
Raleigh, NC 27612 (US)**

(74) Mandataire: **Vekemans, André
COMPAGNIE IBM FRANCE Département de
Propriété Industrielle
F-06610 La Gaude (FR)**

Courier Press, Leamington Spa, England.

## Description

Domaine technique

La présente invention concerne un circuit de commande de mémoire tampon tel que définit par la revendication 1 et, plus particulièrement, un tel circuit utilisable dans un analyseur optique.

Etat de la technique antérieure

Un type bien connu d'analyseur qui permet de lire des étiquettes comportant des informations codées au moyen d'un code à barres tel que celui appelé dans la littérature anglo-saxonne "Universal Product Code" (UPC), balaie de façon répétée le produit sur lequel se trouve l'étiquette au moyen d'un faisceau de lumière cohérente lorsque le produit passe devant une fenêtre appropriée. La lumière qui est réfléchie à l'intérieur de cette fenêtre change d'intensité en fonction du pouvoir réfléchissant de la partie de la surface qui est frappée par le faisceau. Après avoir procédé à une conversion électrique de la lumière ainsi réfléchie, en utilisant un tube photo-multiplicateur ou une photodiode, on obtient une sinusoïde irrégulière présentant des crêtes positives et négatives. La longueur des parties positives et négatives du signal est proportionnelle à la largeur des barres claires et sombres que comporte l'étiquette lorsque cette dernière est effectivement frappée par le faisceau.

L'analyse d'une étiquette comportant des informations ainsi codées est rendue plus compliquée par le fait que la surface du produit qui se trouve à proximité de l'étiquette comporte généralement des symboles imprimés ou des dessins qui, lorsqu'ils sont balayés par le faisceau lumineux, provoquent la génération de signaux sinusoïdaux irréguliers. Il est donc nécessaire que l'analyseur puisse établir une distinction entre ces derniers signaux, qui sont sans intérêt du point de vue du décodage, et les signaux sinusoïdaux qui sont représentatifs des données codées que comporte l'étiquette.

Afin de réduire au minimum la quantité de données brutes qu'il est nécessaire de décoder, les dispositifs de l'art antérieur comportent généralement des circuits de sélection ou de discrimination qui examinent les signaux engendrés par l'analyseur, un mot à la fois, au fur et à mesure que les données représentées par ces signaux sont chargées dans une mémoire tampon. Lorsqu'il résulte de cet examen que la mémoire tampon contient des données qui se rapportent vraisemblablement au contenu de l'étiquette, ces données sont transmises à un processeur, généralement au moyen d'une routine d'interruption, aux fins d'une analyse plus détaillée. La mémoire tampon ainsi débarrassée de son contenu peut alors recevoir de nouveaux signaux engendrés par l'analyseur. Les tests logiques effectués par les circuits logiques de sélection sont d'une nature grossière, c'est-à-dire moins rigoureux que ceux qui sont effectués par le processeur. Si l'on restreint la fonction de ces circuits logiques à l'exécution de tests logiques grossiers, il devient possible de réduire le coût du matériel requis aux fins de mise en oeuvre de cette sélection. Chose plus importante, il y a moins de chances, dès lors que l'on procède à des tests grossiers, pour que des données se rapportant effectivement au contenu d'une étiquette ne soient pas détectées.

Toutefois, le processus de sélection étant d'une nature grossière, il peut arriver que des données soient identifiées à tort comme se rapportant au contenu d'une étiquette, ou qu'un conflit existe à cet égard entre différents ensembles de données.

Si l'analyseur ne doit être employé que pour lire un unique type de données codées sur les étiquettes, il est possible de réaliser des circuits de sélection capables de résoudre ce dernier type de problème. Il existe d'ailleurs différents types de codes à barre actuellement utilisés ou dont l'on envisage l'emploi, y compris différentes versions du code UPC et du code appelé dans la littérature anglo-saxonne "European Article Number" (EAN).

Bien qu'il soit théoriquement possible de réaliser différents circuits de sélection dont chacun serait consacré à l'exécution de tests afférents à un unique code, cette solution serait d'un prix prohibitif.

Une autre solution consisterait à effecteur un minimum de tests grossiers ou à n'effectuer aucun test grossier, la quasi totalité des données brutes fournies par l'analyseur étant alors transmise à un processeur aux fins d'une analyse rigoureuse. L'inconvénient de cette solution réside dans le fait qu'elle exigerait qu'une partie très importante de la totalité du temps de fonctionnement du processeur soit consacrée à trier des quantités considérables de données brutes engendrées pendant le fonctionnement de l'analyseur de manière à séparer les données relativement peu nombreuses qui se rapportent effectivement au contenu d'une étiquette des autres données, lesquelles sont dépourvues de signification. Etant donné que le processeur est généralement utilisé à des fins de supervision ou de calcul, il en résulterait nécessairement une dégradation du temps de réponse du système. Pour obtenir un temps de réponse acceptable, il faudrait vraisemblablement utiliser un processeur coûteux et plus puissant.

Enfin il est également commun, d'après le document US—A—3 868 636 d'utiliser dans un dispositif de reconnaissance de caractères, deux registres à décalage destinés a emmagasiner les données résultant de la partition du caractère balayé.

Exposé de l'invention

La présente invention concerne un circuit de commande de mémoire tampon qui permet de sauvegarder, en vue de leur transfert ultérieur à un processeur, toutes les données identifiées par des circuits logiques de sélection comme étant des données potentiellement valides, c'est-à-dire susceptibles de se rapporter au contenu d'une étiquette, tout en rejetant la plupart des autres données brutes engendrées par l'analyseur. Ledit circuit permet également de diminuer le temps que le processeur doit consacrer à une analyse plus détaillée et au décodage des données.

Un circuit de commande réalisé conformément à la présente invention est utilisé avec plusieurs dispositifs d'emmagasinage de données, l'un desquels est choisi toujours actif, c'est-à-dire mis en état d'emmagasiner des éléments de données reçus en série. Le circuit de commande comprend des moyens permettant d'examiner ces éléments et d'engendrer un signal dit de "données potentiellement valides" (DPV) lorsqu'un premier nombre desdits éléments satisfait à des critères prédéterminés; il comprend également des moyens permettant de compter les éléments de données jusqu'à ce qu'une valeur correspondant à ce premier nombre soit atteinte et de maintenir cette valeur à moins que ou jusqu'à ce qu'un signal DPV soit engendré. Un dispositif de commutation permet, lorsqu'un second nombre d'éléments de données supérieur audit premier nombre est atteint, de mettre un dispositif d'emmagasinage de données, précédemment rendu inactif, en état de recevoir des éléments de données ultérieurs. Les données contenues dans le dispositif d'emmagasinage précédemment rendus actif sont transférées à un processeur aux fins d'une analyse détaillée.

D'autres objets, caractéristiques et avantages de la présente invention ressortiront mieux de l'exposé qui suit, fait en référence aux dessins annexés à ce texte, qui représentent un mode de réalisation préféré de celle-ci.

Brève description des figures

La Figure 1 est un schéma synoptique d'un dispositif d'analyse comprenant le présente invention.

La Figure 2 est un schéma synoptique plus détaillé des éléments d'un circuit de commande de mémoire tampon réalisé conformément à la présente invention.

La Figure 3 représente schématiquement les signaux et les valeurs engendrés lors de la détection d'un unique ensemble de données potentiellement valides.

Description de l'invention

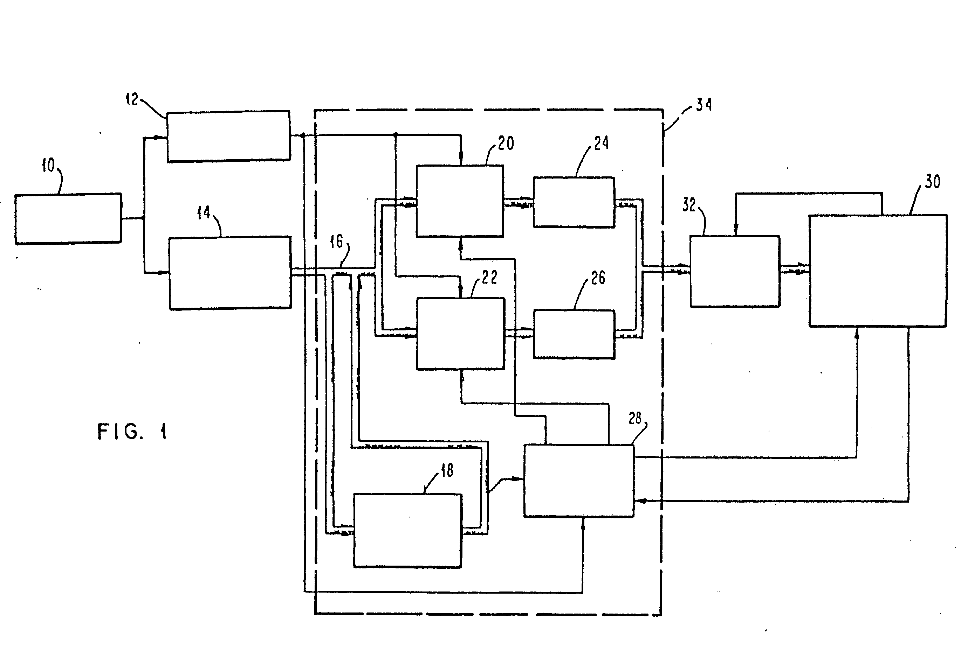

On a schématiquement représenté sur la Figure 1 un dispositif de lecture d'étiquettes dans lequel la présente invention peut être utilisée et qui comprend un analyseur 10. Ce dernier, qui peut être d'un type classique, comprend de préférence un laser, des éléments de déviation de faisceau qui permettent d'engendrer une configuration de balayage au moyen du faisceau laser, des circuits de conversion permettant d'obtenir un signal électrique qui varie en fonction de l'intensité de la lumière réfléchie, ainsi que des circuits de seuil ou d'autres circuits de mise en forme d'impulsions qui permettent d'obtenir un train d'impulsions carrées à partir d'un signal sinusoïdal irrégulier.

Ce train d'impulsions est appliqué à la fois à un détecteur de transitions 12 et à un compteur 14. La fonction du détecteur 12 est de fournir un signal chronologique coïncidant avec l'apparition du front avant de chaque impulsion positive et de chaque impulsion négative. Le compteur 14 engendre un mot binaire dont la valeur est fonction de la largeur de chaque impulsion. Ce compteur se compose de préférence d'un compteur binaire excité par une horloge HF. L'excitation du compteur coïncide avec l'apparition du front avant de chaque impulsion et prend fin lors de l'apparition du front arrière. La valeur du signal de sortie du compteur est directement proportionnelle à la largeur des impulsions.

Les signaux ou les mots binaires obtenus à la sortie du compteur 14 sont appliqués en parallèle par l'intermédiaire d'un câble 16 à un circuit logique de sélection 18. La fonction de ce dernier est d'examiner les données qu'il reçoit et de fournir un signal de données potentiellement valides (DPV) chaque fois qu'un nombre prédéterminé de mots successifs satisfait à des tests logiques grossiers. Des circuits de ce type sont décrits notamment dans les documents US—A—3 909 787 et 4 086 477. Le signal DPV engendré par le circuit 18 est de préférence a bits multiples et indique non seulement que des données potentiellement valides ont été trouvées, mais aussi la direction dans laquelle l'étiquette a fait l'objet d'un balayage. Ce signal est ajouté à l'un des mots de données transmis sur le câble 16. Etant donné qu'un intervalle de temps fini est nécessaire pour mener à bonne fin les tests logiques grossiers effectués par le circuit 18, ledit signal n'est pas ajouté au denier mot du bloc de données potentiellement valides, mais est séparé de celui-ci par un ou plusieurs mots de données. Par exemple, si un tel bloc est constitué par 20 mots, ledit signal est ajouté au second mot qui fait suite à ce bloc, c'est-à-dire au 22ème mot. La valeur de ce décalage est fixée lors de la conception du dispositif.

Le mot ainsi obtenu, qui se compose des sorties combinées du compteur 14 et du circuit logique 18, est appliqué à une paire de circuits de commande de mémoire tampon 20 et 22 qui seront décrits plus loin. D'une façon générale, la fonction de chacun de ces circuits est de commander l'emmagasinage des mots de données reçus par l'intermédiaire du câble 16 dans l'une ou l'autre de deux mémoires tampons, qui sont de préférence identiques, 24 et 26, est emmagasinage étant effectué sous le contrôle d'un circuit de sélection de mémoire tampon 28. Ce dernier, qui sera décrit plus loin, fonctionne lui- même sous le contrôle des signaux d'entrée qu'il reçoit du circuit 18 et du détecteur 12.

Le circuit de sélection 28 engendre également un signal de sortie qui est appliqué à un processeur 30 lorsqu'il s'avère que l'une des mémoires tampons est complètement rempole et contient des données potentiellement valides. Afin d'éviter toute parte de données, le circuit 28, tout en transmettant ledit signal au processeur 30, provoque l'emmagasinage des données que l'on est en train de recevoir dans la mémoire tampon qui était précédemment inactive. En réponse, le processeur 30 commande un circuit de multiplexage 32 de manière à assurer le transfort des données contenues dans la mémoire tampon compètement remplie.

En résumé, les mots de données reçus sont dirigés par l'intermédiaire de l'un des circuits de commande 20, 22 vers une mémoire tampon active tout en étant examinés par le circuit de sélection 18. Si la mémoire tampon active est remplie, les données les plus anciennes sont remplacées par les données nouvellement reçues. Lorsque le circuit logique 28 constate que la mémoire tampon active est remplie et contient un bloc de données potentiellement valides, les mots de données reçus sont chargés dans la mémoire tampon qui était précédemment inactive et le processeur 30 est informé en conséquence, de telle sorte qu'il puisse alors commencer à transférer les données depuis la mémoire tampon complètement chargée par l'intermédiaire du multiplexeur 32. Le processeur 30 effectue alors une analyse plus rigoureuse des données afin de déterminer de façon définitive si ces dernières se rapportent effectivement au contenu d'une étiquette.

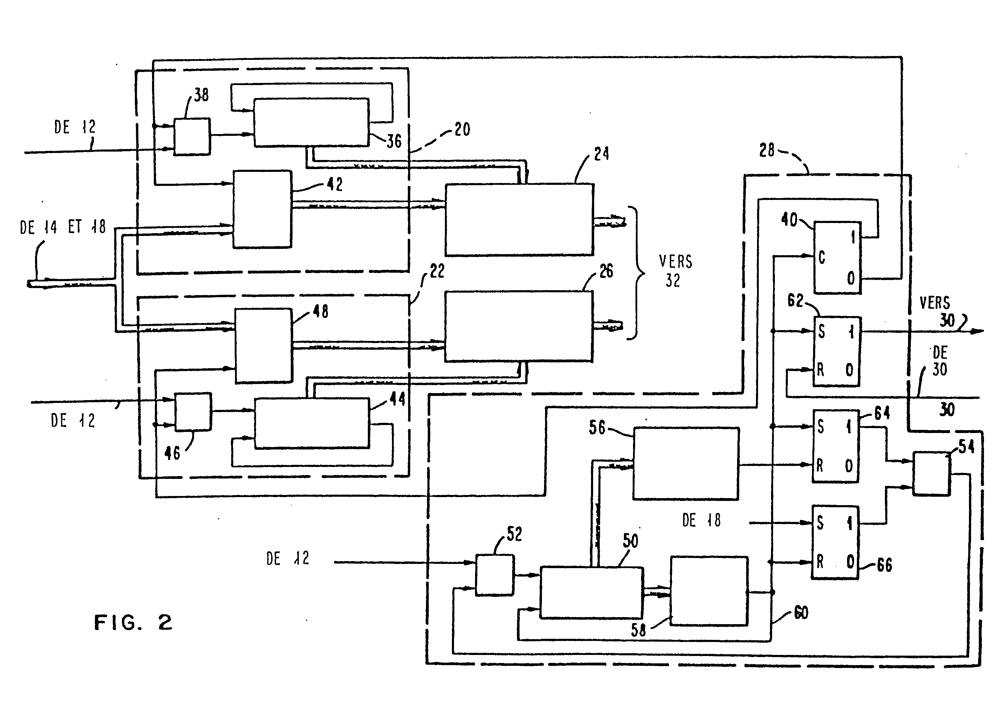

La Figure 2 représente de façon plus détaillée les circuits de commande de mémoire tampon et le circuit de sélection de mémoire tampon 28. Cette figure comprend essentiellement tous les éléments contenus à l'intérieur du cadre pointillé 34 de la Figure 1. Les signaux dont l'origine se situe à l'extérieur de ce cadre sont identifiés au moyen d'une référence aux composants dont ils émanent.

Dans une réalisation préférée de l'invention, les mémoires tampons 24 et 26 sont du type à accès sélectif ou directement adressable et comportent plusieurs positions de mémoire dont chacune peut être adressée séparément et contenir un mot de plusieurs bits. Le nombre de positions de mémoire de chaque mémoire tampon est supérieur au nombre de mots requis pout constituer un bloc de données potentiellement valides. Le circuit de commande 20 afférent à la mémoire tampon 24 comprend un compteur d'adresse 36 dont la valeur maximale correspond au nombre de positions de mémoire que comporte la mémoire tampon 24. Le compteur 36 est excité au moyen de la sortie d'une porte ET 38 à deux entrées, l'une desquelles reçoit la sortie d'un dispositif bistable tel qu'un flip-flop 40, qui change d'état chaque fois qu'une impulsion est appliquée à son entrée d'horloge (C), l'autre entrée de la porte ET 38 recevant la sortie du détecteur de transitions 12. Lorsque le flip-flop 40 est restauré, chaque transition du signal fourni par l'analyseur 10 rend la porte ET 38 passante. De ce fait, la valeur du compteur 36 est incrémentée d'une unité de façon à désigner une nouvelle position d'emmagasinage de la mémoire tampon 24. La sortie inversée du flip-flop 40 est également appliquée à l'une des entrées de chacune des portes ET que comporte un ensemble 42, la seconde entrée de chacune desdites portes recevant la sortie transmise par l'intermédiaire de l'un des conducteurs contenus dans le câble d'entrée 16. L'ensemble de portes ET 42 transmet n'importe quel mot fourni par le compteur 14 et par le circuit logique 18 tant que le flip-flop 40 se trouve dans son état restauré. La position de mémoire vers laquelle le mot est dirigé est fonction de la sortie actuelle du compteur 36.

Le circuit de commande associé à la seconde mémoire tampon 26 est pratiquement identique au circuit de commande déjà décrit. De façon plus précise, le circuit de commande de la mémoire tampon 26 comprend un compteur d'adresses 44 à autorestauration qui est excité par la sortie d'une porte ET 46 à deux entrées, ainsi qu'un ensemble 48 de portes ET dont chacune est connectée à un conducteur différent contenu dans le câble 16 et possède une connexion commune avec le flip-flop 40.

La seule différence entre les circuits 20 et 22 réside dans le fait qu'ils sont commandés par les sorties complémentaires du flip-flop 40. Lorsque ce dernier se trouve dans son état restauré, la porte ET 38 et les portes ET que comporte l'ensemble 42 sont rendues passantes de telle sorte que les données puissent être emmagasinées dans la mémoire tampon 24 dans des positions adressées de façon séquentielle. Pendant ce temps, les portes ET de l'ensemble 48 et la porte ET 46 sont bloquées par un signal de niveau bas émanant du flip-flop 40 de telle sorte que la mémoire tampon 26 ne puisse pas recevoir les données. Lorsque le flip-flop 40 se trouve dans son état opposé (enclenché), les portes ET associées à la mémoire tampon 26 sont rendues passantes et de ce fait les données reçues peuvent être emmagasinées dans des positions de cette mémoire tampon qui sont adressées de façon séquentielle. Dans le même temps, les portes ET associées à la mémoire tampon 24 sont bloquées par un signal de niveau bas obtenu à la sortie inversée du flip-flop 40.

Le flip-flop 40 est l'un des composants du circuit de sélection de mémoire tampon 28. L'état de ce flip-flop est déterminé par un compteur de commande 50, qui est de préférence un compteur binaire à auto-restauration capable d'atteindre une valeur maximale correspondant au nombre de positions de mémoire que comporte chacune des mémoires tampons 24 et 26. Le compteur 50 est excité au moyen d'impulsions fournies par une porte ET 52 à deux entrées, l'une desquelles reçoit une impulsion chaque fois que le détecteur de transition 12 détecte le front avant d'une impulsion positive ou d'une impulsion négative émanant de l'analyseur, la seconde entrée de la porte ET 52 recevant, dans des conditions qui seront précisées ultérieurement, la sortie d'une porte OU 54 faisant partie du circuit de sélection de mémoire tampon 28.

La sortie du compteur 50 est transmise à deux circuits logiques 56 et 58. Ces derniers peuvent se composer d'ensembles de portes ET connectées à des étages particuliers du compteur 50 de telle sorte que des signaux logiques de sortie positifs ne soient engendrés que lorsqu'une première valeur et une seconde valeur du compteur sont respectivement atteintes. Le circuit logique 56 a pour fonction de reconnaître l'instant où le compteur 50 a atteint ladite première valeur, qui correspond au nombre de mots constituant la totalité d'un bloc de données potentiellement valides plus le nombre de mots représentant le retard du signal dit de données potentiellement valides (DPV) et séparant la génération de celui-di du dernier mot du bloc. Par example, si un tel bloc nécessitait l'emmagasinage de 40 mots dans l'une des mémoires tampons 24 et 26 et si le retard dudit signal correspondait à deux unités de comptage ou à deux mots, la logique 56 serait conçue de manière à détecter l'instant où la valeur quarante-deux serait atteinte.

La fonction du circuit logique 58 est de détecter une seconde valeur, correspondant à la capacité maximale d'emmagasinage de mots que présentent les mémoires tampons 24 et 26. Par exemple, si chacune de ces mémoires avait une capacité de 64 mots de plusieurs bits, le circuit logique 58 fournirait une sortie positive lorsque la valeur 64 serait atteinte. Une boucle de restauration 60 permet de remettre le compteur 50 à une valeur initiale (de préférence zéro) une fois que ladite seconde valeur a été détectée. La sortie du circuit logique 58 est appliquée à l'entrée d'horloge (C) du flip-flop 40, aux entrées d'enclenchement (S) respectives de deux flip-flop 62 et 64, et à l'entrée de restauration (R) d'un autre flip-flop 66. Ainsi qu'on le verra plus loin, le compteur 50 n'atteint la seconde valeur que lorsque l'une des mémoires tampon 24 et 26 est complètement remplie et contient un bloc de données potentiellement valides. Le flip-flop 62 répond à la détection de ladite seconde valeur en transmettant un signal de demande d'interruption au processeur 30 afin de provoquer le transfert des données contenues dans la mémoire tampon au processeur par l'intermédiaire du multiplexeur 32. Le flip-flop 62 est restauré par le processeur 30 lorsque ce transfert a été effectué.

Le flip-flop 64 est restauré par la sortie engendrée par le circuit logique 56 lorsque la première valeur est atteinte par le compteur de commande 50, et est enclenché par la sortie engendrée par le circuit logique 58 lorsque la seconde valeur est atteinte. De ce fait, le flip-flop 64 fournit un signal de niveau haut chaque fois que la valeur de la sortie du compteur 50 varie entre l'unité et ladite première valeur. Si l'on utilise les valeurs données plus haut comme exemples, le flip-flop 64 engendre un signal de niveau haut à toutes les valeurs de 1 à 42, et un signal de niveau bas à toutes les valeurs de 43 à 64. La sortie du flip-flop 64 est appliquée à l'une des entrées d'une porte OU 54.

Le flip-flop 66 est enclenché chaque fois que le circuit logique de sélection 18 détecte un bloc de données potentiellement valides et est restauré lorsque la seconde valeur est atteinte. L'intervalle de temps pendant lequel le flip-flop 66 est enclenché ou restauré est indéfini et peut varier considérablement d'un cycle de fonctionnement à l'autre, en fonction uniquement de l'instant où le bloc est détecté.

D'une façon générale, les composante logiques associés au compteur 50 permettent à celui-ci de compter jusqu'à ce que la première valeur soit atteinte, si aucun bloc de données potentiellement valides n'a été obtenu. Le compteur est maintenu à cette première valeur pendant que les données correspondant aux signaux que l'on est en train de recevoir continuent à être chargées dans la mémoire tampon active. Lorsque le circuit logique 18 détecte un tel bloc, le compteur 50 est incrémenté d'une unité par mot reçu jusqu'à ce que la seconde valeur ait été atteinte, le flip-flop 40 changeant alors d'état pour diriger les mots ultérieurement reçus vers la mémoire tampon qui était précédemment inactive. Le flip-flop 62 est enclenché de manière à ce qu'un signal soit transmis au processeur 30 afin que les données soient transférées à ce dernier, depuis la mémoire tampon complètement remplie, par l'intermédiaire du multiplexeur 32.

Pour les besoins de la description du mode de fonctionnement du circuit, on suppose l'existence de certaines conditions initiales. Tout d'abord, on suppose que la capacité maximale de chacune des mémoires tampons 24 et 26 est de 64 mots, ce qui correspond à le seconde valeur, ou valeur maximum, que le compteur de commande 50 peut atteindre. On suppose également qu'un bloc de données potentiellement valides se compose de quarante mots et que le signal DPV est séparé de ce bloc par deux mots, la première valeur étant donc égale à 42. Le flip-flop 40 est initialement restauré de telle sorte que la porte ET 38 et les portes ET de l'ensemble 42 soient partiellement passantes. Le compteur d'adresses 36 est initialement mis à 1 afin d'adresser la première position de mémoire que comporte la mémoire tampon 24.

Lorsque le circuit est mis sous tension, le détecteur de transitions 12 cherche de façon continue à déterminer l'apparition d'une transition. Rien ne se passe tant qu'une transition n'a pas été détectée. Dans le cas contraire, le mot reçu est transmis par l'intermédiaire de l'ensemble 42 de portes ET à la première position de mémoire de la mémoire tampon 26. La transition ainsi détectée est également transmise par l'intermédiaire de la porte ET 38 au compteur d'adresses 36 de manière à incrémenter d'une unité la valeur de l'adresse.

Si la valeur du compteur de commande 50 est inférieure à 42 cette valeur est incrémentée d'une unité et le processus recommence. Après la première transition, les compteurs 50 et 36 se trouvent à la valeur 1 et un mot est emmagasiné dans la mémoire tampon 24.

Ce processus est répété a chaque transition du signal reçu jusqu'à ce que l'on ait déterminé que la valeur du compteur 50 est au moins égale à 42. On détermine alors si cette valeur est supérieure ou égale à 42, mais inférieure à 64. Si la valeur est comprise entre ces limites, on procède à une vérification pour déterminer si un bloc de données potentiellement valides a été trouvé. Si tel n'est pas le cas, le processus recommence. Si, au contraire, un tel bloc a été trouvé pendant le cycle de comptage en cours (c'est-à-dire de 1 à la valeur actuelle), la valeur du compteur 50 est incrémentée avant que le processus ne recommence.

Les étapes qui viennent d'être décrites sont répétées jusqu'à ce que la vérification de la valeur du compteur 50 indique que celle-ci est égale à 64, ce qui indique que l'une des mémoires tampons est complètement remplie et contient au moins quelques mots constituant des données potentiellement valides. Le compteur 50 est alors remis à 1 par l'intermédiaire de la boucle de restauration 60. Le flip-flop 40 est enclenché de manière à rendre actif le circuit de commande 22 associé à la mémoire tampon 26. Dans le même temps, le flip-flop 62 est enclenché et transmet au processeur 30 un signal qui provoque le transfert au processeur des données contenues dans la mémoire tampon 24.

Le cycle de chargement de mémoire tampon est répété de la façon décrite, que la mémoire tampon active soit la mémoire tampon 24 ou 26. On notera cependant que, bien que le compteur de commande 50 s'arrête à la valeur 42 ou soit maintenu à cette valeur à moins qu'une impulsion de sélection de données potentiellement valides n'ait été engendrée avant que le compteur 50 ait atteint cette valeur, les mots de données continuent à être écrits dans la mémoire tampon 26 de façon cyclique, les données les plus récentes étant écrites dans la position de mémoire qui contient les données les plus anciennes. Le compteur 50 ne peut dépasser la valeur 42 que lorsqu'une impulsion de sélection de données potentiellement valides est engendrée pendant le cycle de comptage en cours.

On a supposé dans un but de clarté que toutes les opérations étaient effectuées de façon séquentielle. Cette supposition serait vraie si l'invention devait être mise en oeuvre en programmant un processeur à usage multiples, ce qui se trouve effectivement dans le domaine d'application de l'invention. Toutefois, si l'invention est mise en oeuvre sous la forme d'éléments matériels, les opérations peuvent être effectuées simultanément et non plus séquentiellement. Par exemple, les vérifications effectuées aux blocs 74 et 78 seraient séquentielles dans un système logiciel, mais simultanées dans un système composé d'éléments matériels.

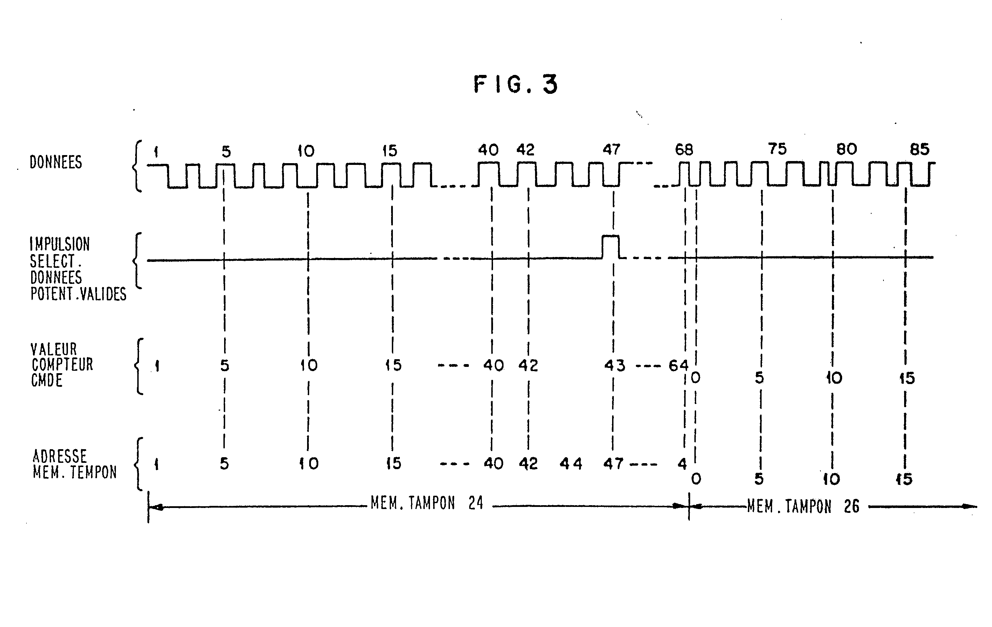

La Figure 3 représente les mots reçus, une impulsion de sélection de données potentiellement valides et les valeurs du compteur de commande 50 et du compteur d'adresses de mémoire tampon lors d'un unique cycle de chargement de mémoire tampon. Sur la Figure 3, on peut supposer que chaque impulsion positive représente une barre noire utilisée sur une étiquette aux fins du codage de données et que chaque impulsion négative représente une barre blanche (ou un espace) sur la même étiquette. La valeur du compteur de commande et celle du compteur d'adresses associé à la mémoire tampon choisie suivent le nombre de mots de données reçus jusqu'à ce que le compteur de commande atteigne la première valeur, c'est-à-dire 42. Si aucune impulsion de sélection de données potentiellement valides n'a été engendrée entre-temps, les deux signaux appliqués aux entrées de la porte OU 54 passent au niveau bas, ce qui a pour effet de bloquer la porte ET 52 et d'empêcher l'application d'autres impulsions au compteur 50. Le compteur d'adresses associé à la mémoire tampon 24 continue à être incrémenté à chaque transition afin que les données les plus anciennes contenues dans la mémoire tampon puissent être remplacées par les données les plus récemment reçues.

Lorsqu'une impulsion de sélection de données potentiellement valides est finalement engendrée, le flip-flop 66 est enclenché et fait passer la sortie de la porte OU 54 à un niveau haut. Le compteur de commande 50 reprend alors le comptage des transitions, en commençant à la valeur 42. Tant que la valeur 64 n'a pas été atteinte, les mots de données reçus continuent à être chargés dans la mémoire tampon, les mots emmagasinés les plus anciens étant remplacés par de nouveaux mots. Lorsque la valeur 64 est atteinte, le flip-flop 40 change d'état et applique un signal aux portes ET associées à la mémoire tampon 26 qui était précédemment inactive, ces portes étant rendues passantes, cependant qu'un signal est appliqué aux portes ET associées à la mémoire tampon 24, qui se trouve à présent complètement remplie, de manière à bloquer ces dernières portes. Le compteur d'adresses associé à la mémoire tampon 26 a été mis à 1 soit pendant le démarrage, soit après le dernier transfert du contenu de la mémoire tampon au processeur 30. Le compteur de commande est également remis à 1 par le signal fourni par l'intermédiaire de sa boucle de restauration 60. De ce fait, la valeur du compteur de commande et celle du compteur d'adresses de mémoire tampon progressent de façon identique pendant le chargement des 42 premiers mots de données dans la mémoire tampon 26. Pendant que ce chargement est effectué, le contenu de la mémoire tampon 34 est transféré au processeur 30 par l'intermédiaire du multiplexeur 32.

Le processus de commande d'emmagasinage afférent à la mémoire tampon 26 est pratiquement identique à celui déjà décrit dans le cas de la mémoire tampon 24. Le compteur de commande 50 compte jusqu'à la valeur 42 et reste à cette dernière valeur à moins que le circuit logique de sélection 18 ne provoque l'enclenchement du flip-flop 66 à une valeur comprise entre 1 et 42 pour indiquer que la mémoire tampon que l'on est en train de charger contient des données potentiellement valides. Si aucun signal de données potentiellement valides n'est engendré par le circuit 18 avant que la valeur 42 soit atteinte, 42, le compteur 50 reste à cette valeur bien que les mots de données continuent à être écrits dans la mémoire tampon 26, les mots les plus récents remplaçant les mots les plus anciens. Le comptage reprend seulement lorsqu'une impulsion de données potentiellement valides provoque l'enclenchement du flip-flop 66.

L'avantage que présente cet agencement à deux mémoires tampon est évident. Le processeur 30 ne fait l'objet d'une interruption aux fins d'un décodage que lorsque l'une des mémoires tampon est complètement remplie et contient des données potentiellement valides. Aucune interruption ne se produit et une mémoire tampon complètement remplie ne contient pas de données potentiellement valides ou si une mémoire tampon partiellement remplie contient de telles données. D'autre part, comme les données reçues sont dirigées vers une autre mémoire tampon lorsqu'on a constaté que la première contenait des donnée potentiellement valides, il ne se produit aucune perte de données même si les données potentiellement valides se chevauchent ou sont emboîtées.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

**Revendications**

1. Circuit de commande de mémoire tampon utilisable avec plusieurs mémoires tampons (24, 26), l'une desquelles est choisie et conditionnée pour emmagasiner des éléments de données reçus en série depuis une source d'éléments de données (12) par l'intermédiaire de moyen de transfert caractérisé en ce qu'il comprend:

des moyens (18) permettant d'engendrer un signal de données potentiellement valides lorsqu'un premier nombre d'éléments de données reçus en série a été examiné et satisfait à des critères prédéterminés,

des moyens (50) permettant de compter jusqu'à une première valeur correspondant audit premier nombre d'éléments de données et de ne compter au-delà de ladite première valeur que lorsqu'un signal de données potentiellement valides est engendré, et

des moyens de commutation (28) permettant, lorsqu'une deuxième valeur supérieure à ladite première valeur est atteinte, de conditionner une mémoire tampon (24, 26) qui était précédemment inactive de telle sorte qu'elle puisse recevoir des éléments de données ultérieurs.

2. Circuit de commande de mémoire tampon selon la revendication 1, caractérisé en ce que lesdits moyens de comptage comprennent:

un compteur (50) a cycle fixe et à autorestauration capable d'atteindre une valeur maximale égale à ladite seconde valeur et des moyens de commande de compteur (56, 58, 64, 66, 54).

3. Circuit de commande de mémoire tampon selon la revendication 2, caractérisé en ce que lesdits moyens de commande de compteur comprennent:

une porte ET (52) à deux entrées, l'une desquelles est connectée à la source d'éléments de données (12), ladite porte ET possédant une sortie connectée à l'entrée d'horloge dudit compteur (50),

une logique (56, 58) de reconnaissance de valeur de compteur permettant d'engendrer un premier signal lorsque le compteur a atteint ladite première valeur et un second signal lorsqu'il atteint la valeur maximum,

un premier dispositif bistable (64) possédant une entrée d'enclenchement à laquelle le second signal est appliqué, une entrée de restauration à laquelle est appliqué le premier signal, et une sortie normale,

un second dispositif bistable (66) possédant une entrée d'enclenchement destinée à recevoir la sortie des moyens (18) permettant d'engendrer un signal de données potentiellement valides, une entrée de restauration destinée à recevoir ledit second signal, et une sortie normale, et

une parte OU (54) à deux entrées destinées à recevoir les sorties normales desdits premier (64) et second (66) dispositifs bistables, la sortie de ladite ports OU (54) étant connectée à la seconde entrée de ladite porte ET (52).

4. Circuit de commande de mémoire tampon selon la revendication 3 caractérisé en ce que lesdits moyens de commutation comprennent:

plusieurs ensembles de portes logiques (42, 48), chacun desdits ensembles recevant des informations communes desdits moyens per-

mettant d'engredier un signal de données potentiellement valides (18) et possédant des sorties connectées à une seule des mémoires tampons (24, 26) ainsi qu'une entrée de commande permettant de rendre lesdites portes (42, 48) passantes de façon sélective de manière à transmettre les données d'entrée, et

un dispositif (40) à plusieurs sorties permettant, en réponse à ladite seconde valeur, de fournir une entrée à un desdits ensembles de portes (42, 48) précédemment inactif de manière à rendre ce dernier passant, tout en mettant fin à l'entrée de commande appliquée à l'ensemble de portes qui était précédemment actif.

5. Circuit de commande de mémoire tampon selon la revendication 4, caractérisé en ce que chacune des mémoires tampons (24, 26) possède un nombre de positions de mémoire égal à ladite seconde valeur, et en ce que les éléments de données précédemment emmagasinées sont remplacées par des éléments de données récemment reçus tant que la valeur desdits moyens de comptage est égale ou inférieure à ladite seconde valeur.

6. Circuit de commande de mémoire tampon selon l'une des revendications 1 à 5, caractérisé en ce que chacune desdites mémoires tampons comprend:

une mémoire à accès sélectif (24, 26) connectée auxdits moyens de transfert et possédant un nombre de positions de mémoire directement adressables égal à la valeur maximum dudit compteur (50), chacune desdites positions de mémoire pouvant emmagasiner un mot à plusieurs bits, et

un compteur d'adresses (36, 44) permettant d'adresser de façon séquentielle lesdites positions de mémoire, ledit compteur d'adresses étant rendu actif de façon sélective par une sortie reçue desdits moyens de commutation.

7. Circuit de commande de mémoire tampon selon la revendication 6, caractérisé en ce que les moyens de transfert et le compteur d'adresses associé à une mémoire à accès sélectif particulière sont rendus actifs de façon sélective par une même sortie desdits moyens de commutation.

8. Analyseur optique comportant un circuit de commande de mémoire tampon tel que revendiqué dans l'une des revendications 1 à 7.

**Patentansprüche**

1. Schaltkreis zur Steuerung eines Pufferspeichers mit mehreren verwendbaren Pufferspeichern (24, 26), von denen einer gewählt und ausgelegt wird, um seriell von einer Datenelementquelle (12) über ein Transfermittel erstellte Datenelemente zu empfangen, dadurch gekennzeichnet, dass er folgendes umfasst:

Mittel (18) zum Erzeugen eines potentialgerechten Datensignals, nachdem eine erste Anzahl von seriell empfangenen Datenelementen geprüft und als gewissen vorbestimmten Kriterien entsprechend festgestellt wurde;

Mittel (50), um bis zu einem ersten Wert zählen zu können, welcher der genannten ersten Anzahl von Datenelementen entspricht, und um nur weiter als die genannte erste Anzahl zu zählen, wenn ein potentiell gültiges Datensignal erzeugt wird, und

Schaltmittel (28), um beim Erreichen eines zweiten Wertes, der über dem erstgenannten liegt, einen vorher inaktiven Pufferspeicher (24, 26) derart aufzubereiten, dass er denach einlaufende Datenelemente erfassen kann.

2. Schaltkreis zur Steuerung eines Pufferspeichers nach Anspruch 1, dadurch gekennzeichnet, dass die genannten Zählmittel umfassen:

einen Zähler (50) mit stationärem Zyklus und Selbstrücksetzung, der einen, dem genannten zweiten Wert gleichen Höchstwert erreichen kann und

Mittel zur Steuerung des Zählers (56, 58, 64, 66, 54).

3. Schaltkreis zur Steuerung eines Pufferspeichers nach Anspruch 2, dadurch gekennzeichnet, dass die genannten Mittel zur Steuerung des Zählers folgendes umfassen:

ein UND-Glied (52) mit zwei Eingängen, von denen einer mit der Datenelementquelle (12) verbunden ist, wobei das genannte UND-Glied mit dem Taktgebereingang des genannten Zählers (50) verbunden ist;

eine Logik (56, 58) zum Erkennen des Zählerwerts, die ein erstes Signal generieren kann, wenn der Zähler den genannten ersten Wert erreicht und ein zweites Signal, wenn er den Höchstwert erreicht;

ein ertes bistabiles Bauelement (64) mit einem Synchronisierungseingang, an welchen das zweite Signal angelegt wird, einem Rücksetzeingang, an dem das erste Signal anliegt, und einem normalen Ausgang;

ein zweites bistabiles Bauelement (66) mit einem Synchronisierungseingang zum Empfang des von den Mitteln (18) ausgegebenen potentialgerechten Datensignals, einem Rücksetzeingang zum Empfang des genannten zweiten Signals, und einem normalen Ausgang, und

ein ODER-Glied (54) mit zwei Eingängen zum Empfang der normalen Ausgaben der genannten ersten (64) und zweiten (66) bistabilen Bauelemente, wobei der Ausgang des genannten ODER-Glieds (54) mit dem zweiten Eingang des genannten UND-Glieds (52) verbunden ist.

4. Schaltkreis zur Steuerung eines Pufferspeichers nach Anspruch 3, dadurch gekennzeichnet, dass die genannten Schaltmittel folgendes umfassen:

mehrere logische Schaltkreise (42, 48), wobei jeder dieser logischen Schaltkreise von den genannten Mitteln gemeinsame Informationen erhält, die es ermöglichen, ein potentialgerechtes Datensignal (18) zu generieren, und die Ausgänge aufweisen, die mit einem einzigen der Pufferspeicher (24, 26) sowie auch mit einem Steuereingang verbunden sind, wodurch die genannten Schaltkreise (42, 48) selektiv derart leitend werden, dass sie die eingehenden Daten übermitteln, und

eine Vorrichtung (40) mit mehreren Ausgängen, die es ermöglichen, als Antwort auf den genannten zweiten Wert, einem der genannten Schaltkreise (42, 48), leitend wird, während gleichzeitig die Steuereingabe am vorher aktiven Schaltkreis beendet wird.

5. Schaltkreis zur Steuerung eines Pufferspeichers nach Anspruch 4, dadurch gekennzeichnet, dass jeder der Pufferspeicher (24, 26) eine Anzahl von Speicherpositionen besitzt, die dem genannten zweiten Wert entsprechen, und dass die vorher eingespeicherten Datenelemente durch die kürzlich erhaltenen Datenelemente ersetzt werden, solange der Wert der genannten Zählmittel niedriger als der genannte zweite Wert oder diesem gleich ist.

6. Schaltkreis zur Steuerung eines Pufferspeichers nach einem der Ansprüche 1 bis 5, dadurch gekennzeichnet, dass jeder der genannten Pufferspeicher folgendes umfasst:

einen Speicher mit direktem Zugriff (24, 26), mit den genannten Transfermitteln verbunden und mit einer Anzahl von direkt adressierbaren Speicherpositionen versehen, die dem Höckstwert des genannten Zählers (50) entspricht, wobei jede der genannten Speicherpositionen ein Wort von mehreren Bits einspeichern kann, und

einen Adressenzähler (36, 44), der die genannten Speicherpositionen sequentiell adressieren kann, wobei der genannte Adressenzähler selektiv durch eine von den genannten Schaltmitteln kommende Ausgabe aktiviert wird.

7. Schaltkreis zur Steuerung eines Pufferspeichers nach Anspruch 6, dadurch gekennzeichnet, dass die genannten Transfermittel und der Adressenzähler, der mit einem besonderen Speicher mit direktem Zugriff in Verbindung steht, selektiv von einer Ausgabe der genannten Schaltmittel aktiviert werden.

8. Optisches Analysegerät mit einem Schaltkreis des Pufferspeichers wie in einem der Ansprüche 1 bis 7 beansprucht.

## Claims

1. A buffer storage control circuit for use with a plurality of buffer storages (24, 26) a selected one of which is conditioned to store data units serially received from a source (12) of data units through gating means, characterized in that it comprises:

means (18) for examining serially-received data units to generate a candidate signal when a first number of data units satisfies predetermined criteria;

means (50) for counting up to a first count corresponding to said first number of data units and for counting beyond said first count only when a candidate signal is generated; and

switching means (28) responsive to a second count greater than said first count to condition a previously inactive buffer storage (24, 26) to receive subsequent data units.

2. A buffer storage control circuit according to claim 1, characterized in that said counting means comprises:

a self-resetting, fixed-cycle counter (50) capable of attaining a maximum count equal to said second count, and

counter control means (56, 58, 64, 66, 54).

3. A buffer storage control circuit according to claim 2, characterized in that said counter control means includes:

a dual-input AND gate (52) having a first input connected to said source (12) of data units and an output connected to the clock input of said counter (50);

count recognition logic (56, 58) for generating a first signal when the counter reaches said first count and a second signal when the counter reaches said maximum count;

a first bistable device (64) having a set input for receiving the second signal, a reset input for receiving the first signal, and a normal output;

a second bistable device (66) having a set input for receiving the output from said candidate signal generating means (18), a reset input for receiving said second signal, and a normal output; and

a dual-input OR gate (54) for receiving the normal outputs from said first (64) and second (66) bistable devices, the output of said OR gate (54) being connected to the second input of said AND gate (52).

4. A buffer storage control circuit according to claim 3, characterized in that said switching means comprises:

a plurality of logic gate arrays (42, 48) each of said arrays receiving common information from said candidate signal generating means (18), and having outputs connected to only one of said buffer storages (24, 26) and a control input for selectively enabling said gates (42, 48) so as to pass input data; and

a multi-output device (40) responsive to said second count to provide an enabling control input to a previously inactive one of said logic gate arrays (42, 48) while terminating the control input to the previously active array.

5. A buffer storage control circuit according to claim 4, characterized in that each of the buffer storages (24, 26) has a number of storage locations equal to the value of said second count, and in that previously stored data units are replaced by newly received data units so long as the count in said counting means is equal to or less than said second count.

6. A buffer storage control circuit according to any one of claims 1 to 5, characterized in that each of said buffer storages comprises:

a random access memory (24, 26) con-

17 **0 029 923** 18

nected to said gating means and having a number of directly addressable storage locations equal to the maximum count in said counter (50), each of said storage locations being adapted to store a multi-bit binary word; and

an address counter (36, 44) for sequentially addressing said storage locations, said address counter being selectively enabled by an output from said switching means.

7. A buffer storage control circuit according to claim 6, characterized in that the gating means and the address counter associated with a particular random access memory are selectively enabled by the same output from said switching means.

8. An optical scanner including a buffer storage control circuit as defined in any one of claims 1 to 7.

FIG. 1

0029 923

FIG. 2

DE 12

DE 14 ET 18

DE 12

DE 12

38
36
20
42
24
VERS 32
22
48
26
44
46
56
DE 18
52
50
58
60
28
40        C 1 O
62        S 1 R O
VERS 30
DE 30
30
64        S 1 R O
54
66        S 1 R O

0029923

2

# FIG. 3

DONNEES

IMPULSION
SELECT.
DONNEES
POTENT.VALIDES

VALEUR
COMPTEUR
CMDE

ADRESSE
MEM.TEMPON

MEM.TAMPON 24 ——— MEM.TAMPON 26

0029 923